Europäisches Patentamt

European Patent Office

Office européen des brevets

(11) Publication number: 0 504 672 A1

# EUROPEAN PATENT APPLICATION

(21) Application number: 92103802.2

(22) Date of filing: 06.03.92

(51) Int. Cl.5: **B29C 47/08**

PRIORITY: IT 200391 UD91A000041.

(30) Priority: 20.03.91

(43) Date of publication of application:
23.09.92 Bulletin 92/39

(84) Designated Contracting States:
AT CH DE ES FR GB IT LI

(71) Applicant: PAVAN MAPIMPIANTI S.p.A.
Via Monte Grappa 8
I-35015 Galliera Veneta (Padova)(IT)

(72) Inventor: Conselvan, Pierluigi
Via Veneto 2
I-35030 Selvazzano (PD)(IT)
Inventor: Cecchin, Attilio
Viale Europa 11/b
I-35018 S. Martino di Lupari (PD)(IT)

(74) Representative: Petraz, Gilberto Luigi
GLP S.r.l. Piazzale Cavedalis 6/2
I-33100 Udine(IT)

(54) **Device to expel dies.**

(57) Device to expel dies on machines producing alimentary paste such as long pasta, pasta in thin foils, bird's nest pasta, etc., such machines including a longitudinally extending extruding head (15), a die (11) containing a plurality of extrusion holes arranged in at least one row, a support (17) for the die (11), actuator means (33) and a supporting base (18), the device comprising displacement means (31) which induce an expulsion movement including a first substantially longitudinal segment and a second segment defined by an algorithm, the first segment being a direct function of the longitudinal length of the extrusion holes and corresponding to at least 0.7 times the longitudinal length of the extrusion holes.

fig.5

fig.6

EP 0 504 672 A1

fig.2

This invention concerns a device to expel dies, as set forth in the main claim.

To be more exact, the device of this invention enables the die to be expelled from a head of a plant that produces alimentary paste, generally called "pasta".

The device according to the invention is applied to the foodstuffs industry and, in particular, to the technologies of conversion of cereals or other alternative raw materials of foodstuffs.

Many typed of pasta such as, for instance, long pasta, pasta in thin foils, bird's nest pasta, etc., are normally produced by being extruded through prismatic dies comprising holes arranged in several rows, the holes having cross sections suitable to obtain the required product.

Industrial machines producing pasta normally work with a continuous cycle, but modern requirements for the production of various forms of pasta and also the need to maintain the dies entail the frequent changing of the dies.

This change involves first of all the need to shear the layer of product located between the head of the machine and the die.

The method most widely used nowadays for removing the die consists in thrusting the die longitudinally from its seating by means of suitable actuators or mechanical systems suited to the purpose.

This longitudinal thrust is preferred since the great stresses generated in shearing the layer of product do not induce bending.

In fact, if the die were thrust orthogonally to its longitudinal front, the die would not undergo considerable bending stresses only if the thrust were evenly distributed.

But this solution is very complex and costly, and with every other solution permanent strains or, indeed, localized breakages take place and make the die itself unusable.

Longitudinal displacement of the die is therefore preferred because it also makes it possible not to use great power, even though this entails of necessity a very low speed of movement.

It follows that the time needed to achieve complete extraction of the die and replacement of the same is considerable.

The feeding press which delivers the product to the die has to be halted for the whole time necessary for removal and replacement of the die.

This situation entails a loss of output and therefore not enough financial exploitation of the pasta production machine, which includes a drier downstream of the extrusion system.

As is known, the pasta to be dried is moved at a constant speed along the whole drier, within which the pasta stays for a preset time.

The stay time within the drier should not be varied since otherwise it would generate unacceptable changes of the product; the conveyor system within the drier should therefore not be halted.

The halting of the feeding press causes a lack of product on the conveyor system inside the drier, and this lack of product in the drier leads to a change in the currents of air, with resulting climatic variations that entail variations of product quality in the trailing end of the previous batch and the leading end of the new batch.

These variations of product quality are not acceptable and involve rejects of the product.

These rejects increase still more the financial loss caused by the prolonged stoppage of output due to replacement of the die.

Another drawback consists in the fact that with present techniques the die has to leave the machine sideways along the whole length of the die and takes up a great space, thus creating considerable space problems.

According to the state of the art time is required for one die to travel in one direction for its withdrawal and for another die to travel in the opposite direction for its installation, plus a further time for removal of the dirty die and for installation of the clean die.

The state of the art covers further solutions for restricting the time required for withdrawal of a die; for instance, the new die is inserted in such a way that it thrusts the dirty die out lengthwise, thus eliminating the time of waiting for removal of the dirty die.

In this case the overall bulk of the machine is further increased by the fact that space has to be found for one die to be inserted on one side and for the dirty die to be ejected on the other side.

The present applicants have designed, tested and embodied this invention so as to overcome the shortcomings of the state of the art and to achieve further advantages.

The invention is set forth and characterized in the main claim, while the dependent claims describe variants of the idea of the main embodiment.

The purpose of the invention is to provide a device which enables the die to be expelled quickly from the head of the machine in such a way that the die can be replaced or merely cleaned in a very short time.

The expulsion takes place substantially orthogonally to the lengthwise axis of the die and thus reduces the problems of overall bulk and of the travel required for expulsion of the die.

Thus, the device of this invention makes possible a considerable reduction in the time required for expulsion of the die from the head of the machine and therefore a great reduction in the downtime of the feeding press.

In this way a better financial exploitation of the machine and a great reduction of rejects in the drier are achieved, the rejects being directly in proportion to the time of the stoppage of the feeding press.

According to the invention the movement of expulsion includes a first substantially lengthwise segment of travel of the die. Thereafter the movement of expulsion of the die includes a second segment in which the predominant movement is orthogonal, although possibly combined with a lengthwise movement.

The second segment includes the combination of an orthogonal movement with a lengthwise movement defined by an algorithm which characterises the path of the die.

This, it is possible to obtain circular movements, straight movements at a desired inclination, curved movements, at least partly askew movements or combined movements.

The length of the first substantially lengthwise segment of travel is a direct function of the lengthwise dimension of the extrusion holes of the die and of the physical and chemical properties of the pasta to be extruded.

The length of this first segment is normally enough when it is between 0.7 times and ten times the longitudinal length of the extrusion holes.

This length may even reach one hundred times the length of the extrusion holes on presses working at a very high pressure, greater than 250 atmospheres, and with very coherent pastas.

According to a first embodiment the die expulsion device of this invention consists essentially of two connecting rods, both of which are rotatably connected at one end to the support of the die and are positioned orthogonally to the die when the die is at work.

Each of the connecting rods is pivoted at its other end on a stationary pivot solidly fixed to the head of the machine.

Suitable drive means make possible the rotary motion of the connecting rods. This rotary motion of the connecting rods about their respective stationary pivots enables the respective movable pivots of the rods to be displaced circumferentially, and therefore each point of the die support is displaced on the plane of movement by describing an arc of a circumference.

As said above, at the beginning of the expulsion movement the connecting rods are positioned with their axes orthogonal to the longitudinal axis of the die and therefore the first segment of the expulsion movement takes place intially in a direction substantially longitudinal to the die.

This fact enables the die to be moved in the direction most favourable for easy shearing of the layer of pasta located between the head of the machine and the die itself.

As the shearing stresses generated by the shearing of the pasta are greatest at the beginning of the movement and decrease gradually as the fibres of pasta are cut, it is acceptable that the movement should increase gradually its component normal to the longitudinal axis of the die.

When the connecting rods have carried out a rotation of 90°, the movement will contain a nil longitudinal component and only a component orthogonal to the longitudinal axis of the die.

According to a variant the two connecting rods are connected by suitable connecting means so as to prevent occurrences of unsteadiness at the time when both the connecting rods are positioned parallel to the longitudinal axis of the die and lie substantially on the same plane.

According to another variant the die support and the head include mating slider/cam means. For instance, the sliders may be included on the die support, while the cams are coordinated with the head.

These cams may include any desired track including the first and second segments and defined by any desired algorithm.

Next, the operational state of the art includes kinematic motions and/or linkages able to define any desired reciprocal die/head track and constituting as many variants able to provide the idea of the solution.

The attached figures, which are given as a non-restrictive example, show some preferred embodiments of the invention as follows:

| Fig.1 | shows a front view of the head equipped with a die expulsion device of this invention; |
|---|---|
| Fig.2 | is a plan view of Fig.1; |
| Fig.3 | is a partly cutaway view along the line A of Fig.1; |
| Fig.4 | is a partly cutaway view along the line B of Fig.1; |
| Figs.5 and 6 | show the partial section C-C of Fig.1 in the working position and replacement position respectively; |
| Fig.7 | shows another variant of the embodiment with a slider/cam system; |
| Fig.8 | shows another variant of the embodiment with a double movement. |

In the figures the reference number 10 indicates generally a die expulsion device according to the invention.

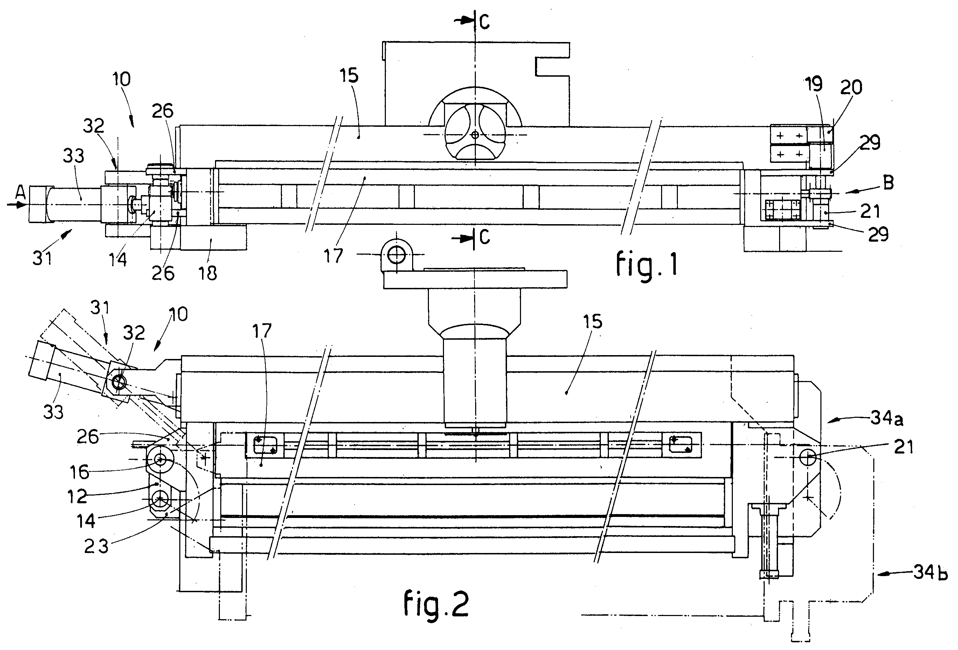

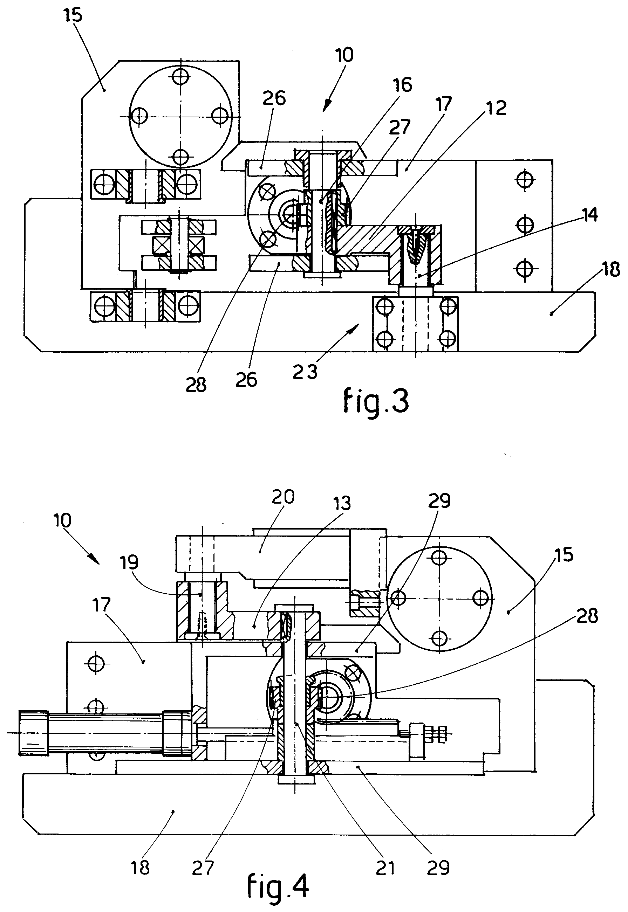

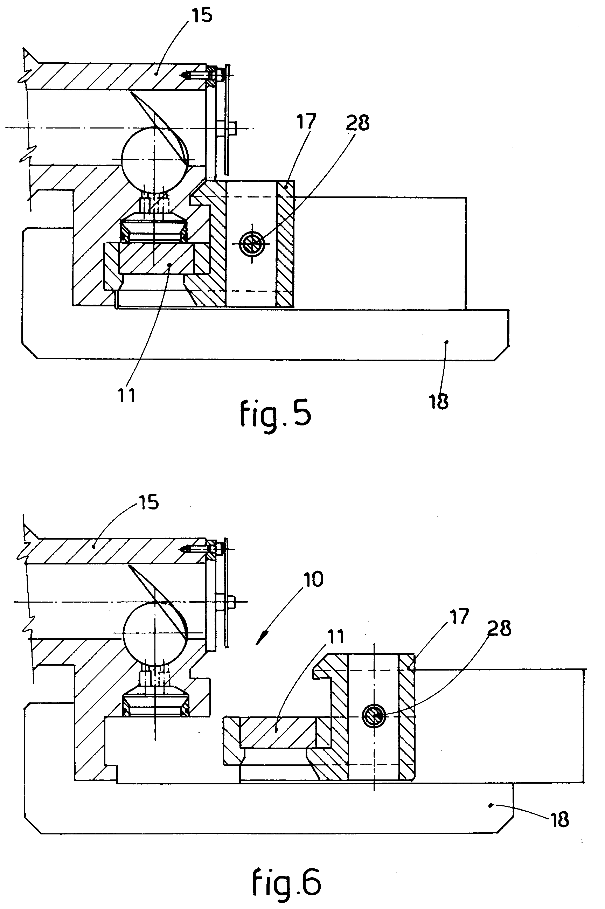

The device 10 to expel a die 11 consists, in the examples of Figs.1 to 6, of a first connecting rod 12 positioned at one end of the die 11 and a second connecting rod 13 at the other end of the die 11.

Other elements performing the functions of connecting rods, such as gearwheels or sector of gearwheels, can be included instead of the connecting rods 12-13.

In this particular example one end of the first connecting rod 12 is pivoted on a first stationary pivot 14 firmly fixed to a base 18 of a head 15 of the machine, whereas the other end of the first connecting rod 12 cooperates with a first movable pivot 16 engaged circumferentially in the first connecting rod 12.

In this case the first movable pivot 16 cooperates with suitable brackets 26 solidly secured to a support 17 of the die 11.

The first stationary pivot 14 is fitted to a supporting plate 23 solidly fixed to the base 18 of the head 15.

The first movable pivot 16 comprises a toothed wheel 27 cooperating with a rack formed on a shaft 28.

The shaft 28 bearing the rack extends along the extruding head 15 as far as the second connecting rod 13, which in this case has one end pivoted on a second stationary pivot 19 rotatably and firmly engaged in an arm 20 firmly secured to the head 15.

The other end of the second connecting rod 13 cooperates with a second movable pivot 21 secured to the support 17 of the die 11 by means of suitable brackets 29.

The second movable pivot 21 is engaged circumferentially in the second connecting rod 13.

A toothed wheel 27 is solidly installed about the second movable pivot 21 and cooperates with the rack borne on the shaft 28.

Owing to the movement of the connecting rods 12 and 13 about their stationary pivots 14 and 19 respectively the support 17 of the die 11 takes up during the working step a working position 34a and during the step of cleaning and/or replacement of the die 11 a replacement position 34b (see Fig.2).

In the working position 34a the connecting rods 12-13 are positioned with their axes substantially orthogonal to the longitudinal axis of the die 11.

In this example the displacement of the connecting rods 12-13 is caused by a suitable actuator 33 pivoted on a hinge 32 solidly fixed to the head 15; this actuator 33 acts on the support 17 of the die 11.

When the actuator 33 acts, every point of the support 17 of the die 11 is displaced on the plane of movement and describes, in this example, an arc of a circumference starting substantially from a tangent to the extruding head 15.

Fig.2 shows with lines of dots and dashes the actuator 33 in the position taken up in the replacement step 34b.

The connecting rods 12-13 forming a frame together with the support 17 of the die 11 behave as an articulated parallelogram.

According to a variant the connecting rods 12-13 are connected together by the rack-bearing shaft 28, which cooperates in this case with the respective toothed wheels 27 solidly fixed to the first and second movable pivots 16-21.

The presence of the shaft 28 bearing the rack obviates functional unsteadiness at the time when the connecting rods 12-13 are parallel to the axis of the die 11 and lie substantially on the same plane.

In fact, if the shaft 28 were not present, a displacement between the connecting rods 12-13 might take place during the step of alignment.

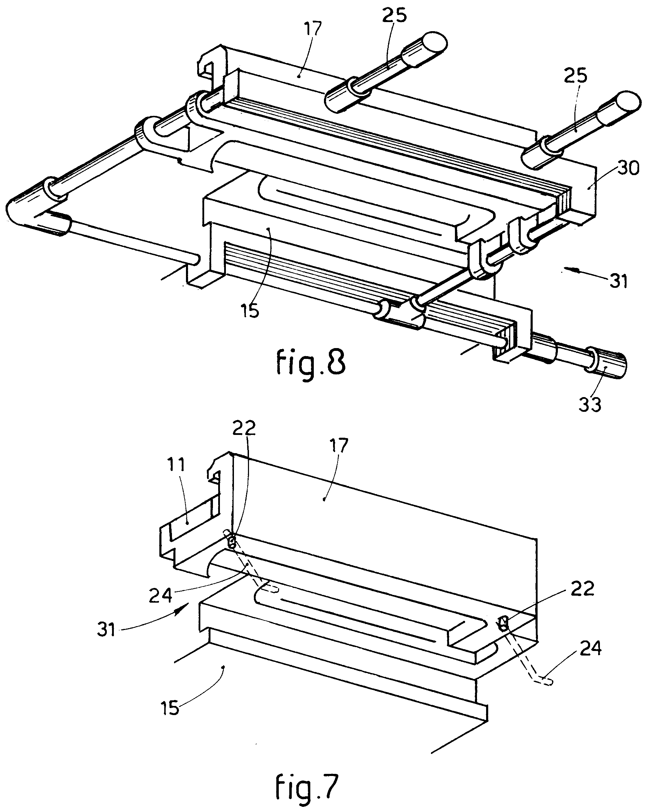

According to the variant of Fig.7 sliders 22 are included on the support 17 and cooperate with stationary cams 24.

An actuator, which is not shown here, actuates the support 17 and constrains it to move along the path defined by the cams 24.

According to a further variant a first actuator 33 may be included which acts in this case on a frame 30 bearing the support 17 of the die 11 and causes displacement of the frame 30 along the first substantially longitudinal segment of movement in relation to the extruding head 15.

The first segment may be of any desired length, but advantageously will have the minimum possible length, which can also be adjusted.

When the first segment of movement has been completed, a second actuator 25, or a plurality of actuators, intervenes and cause the support 17 of the die 11 to carry out a desired orthogonal movement.

Displacement means 31 which impart the desired movement of displacement vary in the different embodiments shown.

Thus in the embodiment of Figs.1 to 6 the displacement means 31 consist essentially of the connecting rods 12-13 cooperating with the actuator 33.

In the embodiment of Fig.7 the displacement means 31 consist essentially of the cam 24 cooperating with the actuator 33.

In the embodiment of Fig.8 the displacement means 31 consist essentially of the frame 30 cooperating with the actuators 25 and 33.

Other variants can be obtained by combining the various embodiments or by providing linkages and/or kinematic motions of a known type.

In the embodiments of Figs.7 and 8 the various parts have been drawn as desired for the sole purpose of illustrating the practical idea of a solution.

## Claims

1. Device to expel dies on machines producing alimentary paste such as long pasta, pasta in thin foils, bird's nest pasta, etc., such machines including a longitudinally extending extruding head (15), a die (11) containing a plurality of extrusion holes arranged in at least one row, a support (17) for the die (11), actuator means (33) and a supporting base (18), the device being characterized in that it comprises displacement means (31) which induce an expulsion movement including a first substantially longitudinal segment and a second segment defined by an algorithm, the first segment being a direct function of the longitudinal length of the extrusion holes and corresponding to at least 0.7 times the longitudinal length of the extrusion holes.

2. Device as claimed in Claim 1, in which the first longitudinal segment of movement has a maximum length of about one hundred times the longitudinal length of the extrusion hole.

3. Device as claimed in Claim 1 or 2, in which the displacement means (31) induce in the support (17) of the die (11) a movement which is at least partly circular.

4. Device as claimed in Claim 1 or 2, in which the displacement means (31) induce in the support (17) of the die (11) a movement which is at least partly straight.

5. Device as claimed in Claim 1 or 2, in which the displacement means (31) induce in the support (17) of the die (11) a movement which is at least partly curved.

6. Device as claimed in Claim 1 or 2, in which the displacement means (31) induce in the support (17) of the die (11) a movement which is at least partly askew.

7. Device as claimed in any claim hereinbefore, in which the displacement means (31) comprise a first (12) and a second (13) connecting rod, which are substantially parallel and are anchored rotatably to the base (18) and the support (17) of the die (11) and are substantially orthogonal to the extruding head (15) during the working step.

8. Device as claimed in any claim hereinbefore, in which a pivot (16-21) mating with each connecting rod (12-13) is solidly fixed to a toothed wheel (27) meshing with respective racks machined on one single shaft (28).

9. Device as claimed in any of Claims 1 to 6 inclusive, in which the displacement means (31) comprise slider means (22) cooperating with cams means (24).

10. Device as claimed in any of Claims 1 to 6 inclusive, in which the displacement means (31) comprise frame means (30) with auxiliary actuators (25).

fig.3

fig.4

fig.5

fig.6

fig.8

fig.7

# EUROPEAN SEARCH REPORT

Application Number

EP 92 10 3802

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-2 979 768 (G. B. NICHOLS)<br>* column 1, line 16 - line 35; claims 1-4,6,11; figures 4,10,11 * | 1,2,4,9 | B29C47/08 |
| A | US-A-3 001 485 (E. N CZIK)<br>* column 2, line 9 - line 11 *<br>* column 2, line 54 - line 55; figures 1,3,6 * | 1,2,4 | |
| A | EP-A-0 287 800 (F. KRUPP)<br>* page 2, column 1, line 16 - line 47; figures * | 1,4-7 | |
| A | OE-A-3 629 096 (F. KRUPP)<br>* column 4, line 4 - line 23; claims 1,3; figures 1-3 * | 1 | |
| A | US-A-3 299 474 (T. ASHWORTH)<br>* column 1, line 59 - line 65 *<br>* column 2, line 5 - line 22; figures 1,2 * | 1 | |
| A | FR-A-949 355 (D. PATRIA) | | |
| | ----- | | TECHNICAL FIELDS SEARCHED (Int. Cl.5)<br><br>B29C<br>B30B<br>A21C<br>B28B |

The present search report has been drawn up for all claims

| Place of search | Date of completion of the search | Examiner |
|---|---|---|
| THE HAGUE | 01 JULY 1992 | KOSICKI T.R. |